# EUROPÄISCHE PATENTSCHRIFT

(11) **EP 0 949 963 B1**
(45) Veröffentlichungstag und Bekanntmachung des Hinweises auf die Patenterteilung: **23.05.2001**
(21) Anmeldenummer: 97911232.3
(22) Anmeldetag: 20.10.1997
(51) Int. Cl.: B01J 19/00, B01J 19/18, C08F 10/00, C08F 2/00

(54) **OPTIMIERUNG DES KÜHLWASSERSYSTEMS EINER POLYOLEFINANLAGE**
OPTIMIZATION OF A COOLING WATER SYSTEM OF A POLYOLEFIN PRODUCTION UNIT
OPTIMISATION DU SYSTEME DE REFROIDISSEMENT D'UNE UNITE DE PRODUCTION DE POLYOLEFINE

(30) Priorität: 31.12.1996 DE 19654806
(43) Veröffentlichungstag der Anmeldung: 20.10.1999
(73) Patentinhaber: Siemens Axiva GmbH & Co. KG, 65926 Frankfurt am Main (DE)
(72) Erfinder: HESS, Jürgen, D-65719 Hofheim (DE); STUMPF, Matthias, D-50374 Erftstadt (DE)
(86) Internationale Anmeldenummer: EP9705775
(87) Internationale Veröffentlichungsnummer: WO9829185

(56) Entgegenhaltungen:
- DE-B- 1 149 006
- FR-A- 1 503 642

## Beschreibung

Die Erfindung betrifft ein Verfahren zur Kühlung von Polymerisationsreaktoren bei der Herstellung von Polyolefinen, wobei die Polymerisation in einem ersten und mindestens in einem weiteren Reaktor durchgeführt wird, wobei der oder die weiteren Reaktoren dem ersten Reaktor nachgeschaltet sind und über jeweils einen internen Kühlkreislauf, in dem ein Kühlmedium zirkuliert, gekühlt werden.

Verfahren der genannten Art sind bekannt, beispielsweise aus SRI International Report No 128A, Menlo Park, California, USA 1993, in dem das ®Spheripol Verfahren zur Herstellung von Polypropylen beschrieben wird. Danach können Olefine bei Temperaturen zwischen 70 und 85 °C (z.B. HDPE) in einer exothermen Reaktion unter Druck und in Gegenwart eines Katalysators zu Polyolefinen umgewandelt werden. Bei den sogenannten Flüssigphasenverfahren dient das Monomere dabei häufig als Suspendiermittel für das Polymere. Als Polymerisationsreaktoren werden in modernen Hochleistungsanlagen aufgrund des günstigen Oberflächen/Volumen-Verhältnisses bevorzugt Schlaufenreaktoren verwendet. Die exotherme Reaktionswärme wird über die Wärmeaustauschflächen der Reaktoren an einen internen Kühlwasserkreislauf abgegeben. Die Abkühlung des internen Kreislaufes erfolgt durch Zugabe von kühlerem Wasser. Entsprechend muß die gleiche Menge Wasser, das dann durch die Reaktionswärme aufgeheizt ist, aus dem internen Kühlkreislauf abgeführt werden. Üblicherweise wird den internen Kühlkreisläufen das Wasser als sogenanntes "Kreiswasser" über einen externen Kühlkreislauf zu- und abgeführt. In diesem externen Kühlkreislauf wird die vom Kreiswasser aufgenommene Reaktionswärme an Wärmeverbraucher im Prozeß und über Wärmetauschflächen an externes Kühlwasser, z.B. das Rückkühlwasser eines Werkes, abgegeben, um die erforderliche tiefe Vorlauftemperatur für die Reaktoren zu erreichen.

Zur breiten Variation der Produkteigenschaften werden häufig zwei oder mehr Reaktoren produktseitig kaskadiert betrieben (hintereinander geschaltet), wasserseitig werden sie parallel betrieben. Wasserseitiger Kaskadenbetrieb ist zwar an sich bekannt, wird aber bei den bekannten Verfahren nicht angewandt, da man erwartet, daß bei gleichen Reaktionen in gleichen Behältern die Kühlwassereintrittstemperaturen gleich sein müssen. Außerdem würde dabei die Gefahr bestehen, daß sich Temperaturschwankungen vom ersten Reaktor auf den zweiten oder die folgenden Reaktoren übertragen.

Es wurde nun überraschend gefunden, daß wahrscheinlich aufgrund eines Alterungsverhalten des Katalysators sich im zweiten und in jedem weiteren Reaktor der Reaktionsumsatz verringert und daß deshalb folgende, bislang unbemerkte Effekte auftreten: Aufgrund dieses Alterungsverhaltens ist in dem ersten Reaktor wesentlich mehr Reaktionswärme abzuführen als in den darauffolgenden Reaktoren. Sind die Wärmeaustauschflächen der Reaktoren etwa gleich groß, dann ist - bei gleicher Vorlauftemperatur ϑ'ₑₓₜ des externen Kühlwassers - wesentlich mehr Kühlwasser in den internen Kreislauf des Reaktors I zu pumpen als in denjenigen des Reaktors II, Reaktor III, usw. Außerdem liegen die Wasserein- ϑ₁' und -austrittstemperaturen ϑ₁'' des Reaktors I niedriger als für die darauffolgenden Reaktoren. Mit steigender Produktionsmenge sinken dann die Wasserein- ϑ' und -austrittstemperaturen ϑ'' aller Reaktoren ab, während sich die Zulaufmenge an externen Wasser erhöht - besonders für den Reaktor I.

Da die Wasserein- und -austrittstemperaturen ϑ', ϑ'' der Reaktoren mit steigenden Anlagendurchsätzen sinken müssen, wenn mehr Wärme zu übertragen ist, muß bei sonst gleichen Bedingungen entweder sowohl die Temperatur ϑ'ₑₓₜ des externen Kühlkreislaufes abgesenkt als auch dessen Wasserdurchfluß Fₑₓₜ erhöht werden oder/und die dem einzelnen Reaktor zufließende Kühlwassermenge aus dem externen Kühlkreislauf muß erhöht werden . Die Rücklauftemperatur ϑ''ₑₓₜ des externen Kühlwassers sinkt mit steigenden Anlagendurchsätzen ebenfalls ab.

Das Einstellen einer Vorlauftemperatur ϑ'ₑₓₜ ist von der prozeßinternen Wärmenutzung und der Temperatur des externen Kühlwassers abhängig. Das bedeutet: In den Sommermonaten, wenn die Temperaturen des externen Kühlwassers (z.B. Flußwasser oder Rückkühlwasser) ansteigt, muß die Anlagenkapazität zurückgefahren werden.
Das Temperaturniveau des Rücklaufs des externen Kühlkreislaufs wird mit steigenden Anlagendurchsätzen für prozeßinterne Wärmeverbraucher zu niedrig. Eine Erhöhung der externen Wassermenge ist limitiert, beispielsweise durch die maximalen Umpumpmengen der beiden internen Kreisläufe.

Durch diese Nachteile kann die Kapazität einer Polyolefinanlage nicht vollständig genutzt werden.

Der Erfindung lag daher die Aufgabe zugrunde, das eingangs genannte Verfahren so zu verbessern, daß diese Nachteile entfallen.

Die Aufgabe wird erfindungsgemäß durch ein Verfahren der eingangs genannten Art gelöst, das dadurch gekennzeichnet ist, daß Kühlmedium aus dem Kühlkreislauf des ersten Reaktors in den Kühlkreislauf mindestens eines weiteren Reaktors eingespeist wird und die gleiche Menge Kühimedium aus dem Kühlkreislauf dieses Reaktors abgezogen, abgekühlt und in den Kühlkreislauf des ersten Reaktors zurückgeführt wird.

Gegenstand der Erfindung ist somit ein Verfahren zur Kühlung von Polymerisationsreaktoren bei der Herstellung von Polyolefinen, wobei die Polymerisation in einem ersten und mindestens in einem weiteren Reaktor durchgeführt wird, wobei der oder die weiteren Reaktoren dem ersten Reaktor nachgeschaltet sind und über jeweils einen internen Kühlkreislauf, in dem ein Kühlmedium zirkuliert, gekühlt werden, dadurch gekennzeichnet, daß Kühlmedium aus dem Kühlkreislauf des ersten Reaktors in den Kühlkreislauf mindestens eines weiteren Reaktors eingespeist wird und die gleiche Menge Kühlmedium aus dem Kühlkreislauf dieses Reaktors abgezogen, abgekühlt und in den Kühlkreislauf des ersten Reaktors zurückgeführt wird.

In einer bevorzugten Ausführungsform erfolgt die Einspeisung temperatur- oder durchflußgesteuert, wobei der Sollwert aufgrund einer Temperatur oder einer gewünschten Durchflußmenge vorgegeben wird. Als Kühlmedium findet vorzugsweise Wasser Verwendung. Die Kühlung des Kühlmediums kann in einem externen Kühlkreislauf stattfinden, der seinerseits mit Kühlwasser direkt oder indirekt abgekühlt werden kann. Die Temperaturen der Kühlmedien in den einzelnen Kühlkreisläufen liegen vorzugsweise in den Bereichen von 30 bis 80 °C (Kühlkreislauf des ersten Reaktors), von 30 bis 80 °C (Kühlkreisläufe der weiteren Reaktoren) und von 20 bis 40 °C (externer Kühlkreislauf).

Gegenstand der Erfindung ist weiter eine Vorrichtung zur Durchführung dieses Verfahrens sowie ein Verfahren zur Herstellung von Polyolefinen, insbesondere von Polypropylen.

Im folgenden wird das erfindungsgemäße Verfahren anhand einer möglichen Ausführungsform, die in der Zeichnung als Verfahrensfließbild dargestellt ist, näher erläutert.

Zwei Polymerisationsreaktoren, Reaktor I 1 und Reaktor II 2, sind über eine Rohrleitung 3 miteinander verbunden. Das Monomer, andere Zuschlagstoffe und der Katalysator gelangen über Zuführungen 4,5 in den Reaktor I 1, in dem die Polymerisation gestartet wird, von dort zusammen mit dem gebildeten Polymer über die Rohrleitung 3 in den Reaktor II 2, in dem die Polymerisation weiter fortschreitet und von dem Reaktor II 2 durch einen Ausgang 6 zu einem weiteren Reaktor oder zur Weiterverarbeitung. Der Reaktionsstart kann aber auch in einem vorgeschalteten, sogenannten Startreaktor (Babyloop) erfolgen. Die beiden Reaktoren I 1, II 2 sind mit Kühlmänteln 7,8 versehen, die in internen Kühlkreisläufen I 9,II 10 integriert sind und in denen mittels Pumpen 11,12 ein Kühlmedium zirkuliert. Die beiden internen Kühlkreisläufe I 9,II 10 sind über Rohrleitungen 13,14,15,16 mit einem externen Kühlkreislauf 17 verbunden, über den mit Hilfe einer Pumpe 18 und ansteuerbaren Ventilen 19 gekühltes Kühlmedium einer Vorlauftemperatur ϑ'ₑₓₜ in die internen Kühlkreisläufe I 9, II 10 eingespeist werden kann. Der externe Kühlkreislauf enthält Wärmeaustauscher 20,21 über die Reaktionswärme an einen Verbraucher 22 abgegeben oder mittels externem Kühlwasser 25 aus dem System entfernt werden kann. Entsprechend der Erfindung ist der interne Kühlkreislauf I 9 über eine Rohrleitung 23 und eine Pumpe 24 mit dem internen Kühlkreislauf II 10 verbunden. Erfindungsgemäß wird mit der Pumpe 24 Kühlmedium aus dem Kreislauf I 9 in den Kreislauf II 10 eingespeist werden. Die gleiche Menge kann über die Leitung 14 aus dem Kreislauf II 10 abgezogen werden. Sie kann dann im externen Kreislauf 17 gekühlt und über die Leitung 15 dem Kreislauf I 9 wieder zugeführt werden.

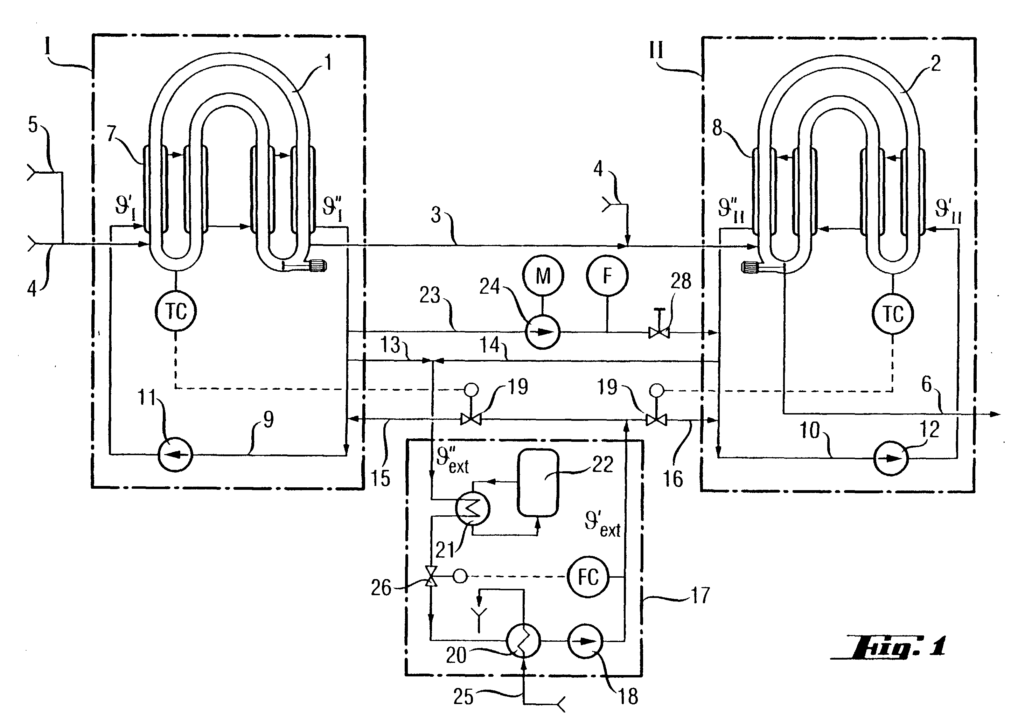

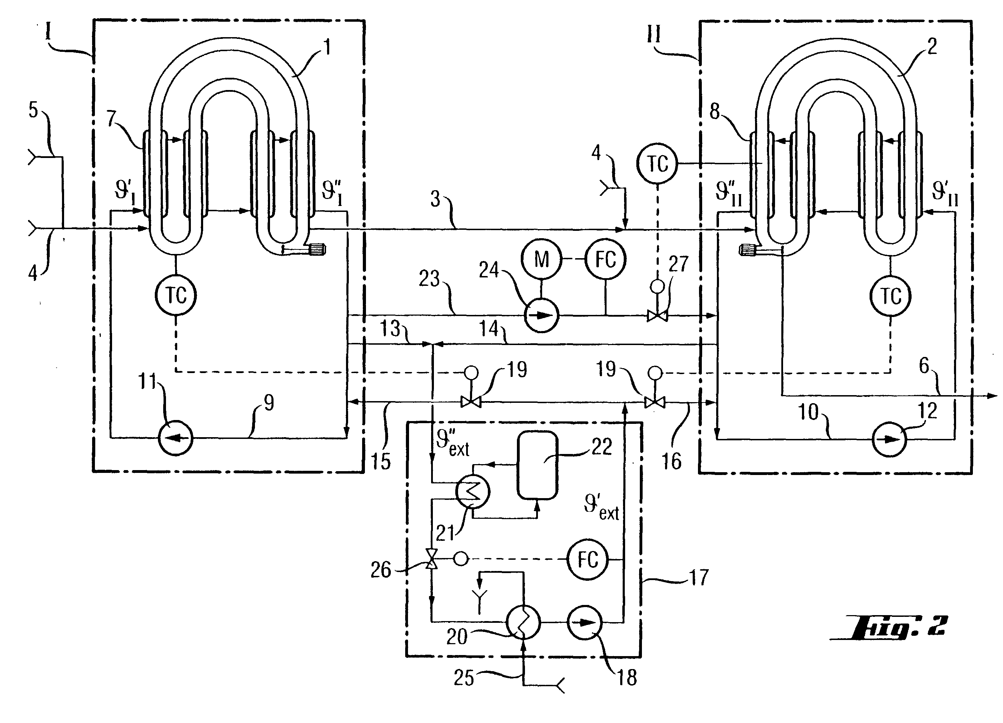

Wie in Fig. 2 dargestellt, kann die Einspeisung durchflußgesteuert (M--FC) oder temperaturgesteuert (Stellventil 27 in Verbindung mit Temperatursteuerung TC) erfolgen.

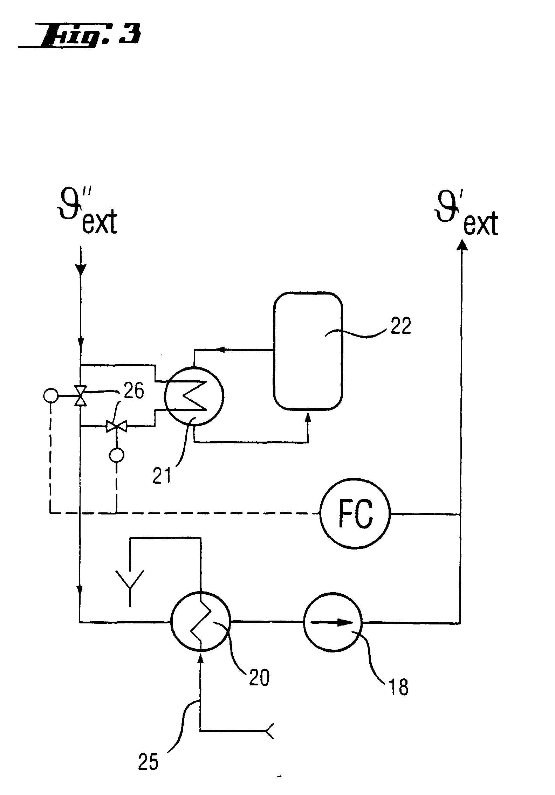

Fig. 3 zeigt eine Möglichkeit, den Verbraucher 22 im externen Kühlkreislauf mittels Stellventilen 26 zu- oder abzuschalten.

Die Rücklauftemperatur ϑ''ₑₓₜ des externen Kühlkreislaufes wird durch die Wassermenge und die erforderliche tiefe Temperatur ϑ''_{I} des internen Kreislaufes I 9 bestimmt. Ist die Austrittstemperatur des internen Kreislaufes I 9 ϑ''_{I} kleiner als die Eintrittstemperatur ϑ'_{II} des internen Kreislaufes II 10 in den Doppelmantel des Reaktors II, so kann das Wasser aus dem Kreislauf I 9 zur Abführung der kompletten Reaktionswärme aus dem Reaktor II 2 verwendet werden.

Das aus dem internen Kühlkreislauf I 9 des Reaktors I 2 austretende erwärmte Wasser wird entsprechend dem Kühlbedarf in den internen Kühlkreislauf 10 des Reaktors II 2 überführt. Dadurch erhöht sich die Menge des aus dem internen Kreislauf 10 des Reaktors II 2 austretenden Wassers, das aufgrund der geringeren Produktionsrate im Reaktor II 2 eine höhere Temperatur ϑ''_{II} besitzt. Die Austrittstemperatur ϑ''_{II} bleibt auch bei der höheren Austrittsmenge unverändert.

Das erfindungsgemäße Verfahren bietet im wesentlichen folgende Vorteile:
Hält man die Umpumpmenge Fₑₓₜ des externen Kühlkreislaufes konstant, dann kann bei gleicher Vorlauftemperatur ϑ'ₑₓₜ eine größere Produktionsmenge gefahren werden. Bei gleicher Produktionsmenge kann die Umpumpmenge Fₑₓₜ im externen Kreislauf gesenkt werden. Bei gleicher Produktionsmenge kann bei Beibehaltung der Umpumpmenge Fₑₓₜ die Vorlauftemperatur des externen Kreiswassers ϑ'ₑₓₜ erhöht werden, beispielsweise von 30°C auf etwas weniger als 35°C. Damit steigt auch die Rücklauftemperatur ϑ''ₑₓₜ des externen Kreiswassers. Das höhere Temperaturniveau des externen Kühlkreislaufes vereinfacht die Wärmenutzung für prozeßinterne Verbraucher beziehungsweise ermöglicht eine größere prozeßinterne Nutzung der Reaktionswärme. Außerdem erleichtert das höhere Temperaturniveau den Wärmeaustausch mit externem Kühlwasser.

Das erfindungsgemäße Kühlverfahren ist nicht auf die Herstellung von Polyolefinen, vorzugsweise Polyethylen oder Polypropylen, beschränkt, sondern eignet sich grundsätzlich zur Kühlung von Wärmequellen, die in ihren Kühlkreisläufen für das Kühlmedium unterschiedliche Eintrittstemperaturen erfordern.

## Patentansprüche

1. Verfahren zur Kühlung von Polymerisationsreaktoren bei der Herstellung von Polyolefinen, wobei die Polymerisation in einem ersten und mindestens in einem weiteren Reaktor durchgeführt wird, wobei der oder die weiteren Reaktoren dem ersten Reaktor nachgeschaltet sind und über jeweils einen internen Kühlkreislauf, in dem ein Kühlmedium zirkuliert, gekühlt werden, dadurch gekennzeichnet, daß Kühlmedium aus dem Kühlkreislauf (9) des ersten Reaktors (1) in den Kühlkreislauf (10) mindestens eines weiteren Reaktors (2) eingespeist wird und die gleiche Menge Kühlmedium aus dem Kühlkreislauf (10) dieses Reaktors (2) abgezogen, abgekühlt und in den Kühlkreislauf (9) des ersten Reaktors (1) zurückgeführt wird.

2. Verfahren nach Anspruch 1, dadurch gekennzeichnet, daß die Einspeisung temperaturgesteuert oder durchflußgesteuert erfolgt.

3. Verfahren nach Anspruch 1 oder 2, dadurch gekennzeichnet, daß das Kühlmedium Wasser ist.

4. Verfahren zur Herstellung von Polyolefinen bei dem die Polymerisation in einem ersten und mindestens in einem weiteren Reaktor durchgeführt wird, wobei der oder die weiteren Reaktoren dem ersten Reaktor nachgeschaltet sind und über jeweils einen internen Kühlkreislauf, in dem ein Kühlmedium zirkuliert, gekühlt werden, dadurch gekennzeichnet, daß das Kühlmedium aus dem Kühlkreislauf (9) des ersten Reaktors (1) in den Kühlkreislauf (10) mindestens eines weiteren Reaktors (2) eingespeist wird und die gleiche Menge Kühlmedium aus dem Kühlkreislauf (10) dieses Reaktors (2) abgezogen, abgekühlt und in den Kühlkreislauf (9) des ersten Reaktors (1) zurückgeführt wird.

5. Verfahren nach Anspruch 4, dadurch gekennzeichnet, daß das Polyolefin Polypropylen ist.

6. Vorrichtung zur Durchführung des Verfahrens nach mindestens einem der Ansprüche 1 bis 5, die einen ersten Reaktor (1) und mindestens einen weiteren Reaktor (2) aufweist, wobei der oder die weiteren Reaktoren (2) dem ersten Reaktor (1) nachgeschaltet sind und jeweils Kühlelemente (7,8) aufweisen, die jeweils in interne Kühlkreisläufe (9,10) integriert sind, dadurch gekennzeichnet, daß der inrerne Kühlkreislauf (9) des ersten Reaktors (1) über Rohrleitungen (13,15) und der interne Kühlkreislauf (10) des mindestens einen weiteren Reaktors (2) über Rohrleitungen (14,16) mit einem externen Kühlkreislauf (17) verbunden sind, daß der interne Kühlkreislauf (9) des ersten Reaktors (1) mit dem internen Kühlkreislauf (10) des mindestens einen weiteren Reaktors (2) über eine Rohrleitung (23) verbunden ist, so daß Kühlmedium aus dem internen Kühlkreislauf (9) des ersten Reaktors (1) in den internen Kühlkreislauf (10) des mindestens einen weiteren Reaktors (2) einspeisbar ist und die gleiche Menge Kühlmedium aus dem internen Kühlkreislauf (10) dieses Reaktors (2) abziehbar, im externen Kühlkreislauf (17) abkühlbar und in den internen Kühlkreislauf (9) des ersten Reaktors (1) zurückführbar ist.

## Claims

1. A process for cooling polymerization reactors in the preparation of polyolefins, the polymerization being carried out in a first reactor and in at least one further reactor, the further reactor or reactors being connected downstream of the first reactor and each being cooled by an internal cooling circuit in which a cooling medium circulates, which comprises cooling medium being fed from the cooling circuit (9) of the first reactor (1) into the cooling circuit (10) of at least one further reactor (2) and the same amount of cooling medium being withdrawn from the cooling circuit (10) of this reactor (2), cooled and recirculated into the cooling circuit (9) of the first reactor (1).

2. The process as claimed in claim 1, wherein the feed is performed under temperature or flow rate control.

3. The process as claimed in claim 1 or 2, wherein the cooling medium is water.

4. A process for preparing polyolefins in which the polymerization is carried out in a first reactor and at least in one further reactor, the further reactor or reactors being connected downstream of the first reactor and each being cooled via an internal cooling circuit in which a cooling medium circulates, which comprises cooling medium being fed from the cooling circuit (9) of the first reactor (1) into the cooling circuit (10) of at least one further reactor (2) and the same amount of cooling medium being withdrawn from the cooling circuit (10) of this reactor (2), cooled and recirculated into the cooling circuit (9) of the first reactor (1).

5. The process as claimed in claim 4, wherein the polyolefin is polypropylene.

6. An apparatus for carrying out the process as claimed in at least one of claims 1 to 5 which has a first reactor (1) and at least one further reactor (2), the further reactor or reactors (2) being connected downstream of the first reactor (1) and each having cooling elements (7, 8) which are each integrated into internal cooling circuits (9, 10), wherein the internal cooling circuit (9) of the first reactor (1) is connected to an external cooling circuit (17) via pipes (13, 15) and the internal cooling circuit (10) of the at least one further reactor (2) is connected to said external cooling circuit (17) via pipes (14, 16), and wherein the internal cooling circuit (9) of the first reactor (1) is connected to the internal cooling circuit (10) of the at least one further reactor (2) via a pipe (23) so that cooling medium is feedable from the internal cooling circuit (9) of the first reactor (1) into the internal cooling circuit (10) of the at least one further reactor (2) and the same amount of cooling medium is withdrawable from the internal cooling circuit (10) of this reactor (2), coolable in the external cooling circuit (17) and recirculable into the internal cooling circuit (9) of the first reactor (1).

## Revendications

1. Procédé de refroidissement de réacteurs de polymérisation au cours de la production de polyoléfines, dans lequel la polymérisation est effectuée dans un premier et au moins dans un autre réacteur, dans lequel le ou les autres réacteurs sont raccordés au premier réacteur et sont refroidis au moyen d'une boucle respective de refroidissement interne dans laquelle circule un milieu réfrigérant, caractérisé en ce que, le milieu réfrigérant est introduit de la boucle de réfrigération (9) du premier réacteur (1) dans la boucle de réfrigération (10) d'au moins un autre réacteur (2) et en ce que la même quantité de milieu réfrigérant est extraite de la boucle de réfrigération (10) de ce réacteur (2), est refroidie et est réintroduite dans la boucle de réfrigération (9) du premier réacteur (1).

2. Procédé selon la revendication 1, caractérisé en ce que l'alimentation est régulée en température ou est régulée en débit.

3. Procédé selon la revendication 1 ou 2, caractérisé en ce que le milieu réfrigérant est l'eau.

4. Procédé de production de polyoléfines dans lequel la polymérisation est effectuée dans un premier et au moins dans un autre réacteur, dans lequel le ou les autres réacteurs sont raccordés au premier réacteur et sont refroidis au moyen d'une boucle respective de refroidissement interne dans laquelle circule un milieu réfrigérant, caractérisé en ce que, le milieu réfrigérant est introduit de la boucle de réfrigération (9) du premier réacteur (1) dans la boucle de réfrigération (10) d'au moins un autre réacteur (2) et en ce que la même quantité de milieu réfrigérant est extraite de la boucle de réfrigération (10) de ce réacteur (2), est refroidie et est réintroduite dans la boucle de réfrigération (9) du premier réacteur (1).

5. Procédé selon la revendication 4, caractérisé en ce que, la polyoléfine est le polypropylène.

6. Dispositif de réalisation du procédé selon au moins une des revendications 1 à 5, qui présente un premier réacteur (1) et au moins un autre réacteur (2), dans lequel le ou les autres réacteurs (2) sont raccordés au premier réacteur (1) et présentent respectivement des éléments réfrigérants (7, 8), qui sont intégrés dans des boucles de réfrigération internes (9, 10) respectives, caractérisé en ce que, la boucle de réfrigération interne (9) du premier réacteur (1) via les canalisations (13, 15) et la boucle de réfrigération interne (10) d'au moins un autre réacteur (2) via les canalisations (14, 16) sont reliées à une boucle de réfrigération externe (17), en ce que la boucle de réfrigération interne (9) du premier réacteur (1) est reliée à la boucle de réfrigération interne (10) d'au moins un autre réacteur (2) au moyen d'une canalisation (23), de sorte que le milieu réfrigérant puisse être alimenté de la boucle de réfrigération interne (9) du premier réacteur (1) dans la boucle de réfrigération interne (10) d'au moins un autre réacteur (2) et que la même quantité de milieu réfrigérant qu'on peut extraire de la boucle de réfrigération interne (10) de ce réacteur (2), puisse être refroidie dans la boucle de réfrigération externe (17) et être réintroduite dans la boucle de réfrigération interne (9) du premier réacteur (1).
